# NEUE EUROPÄISCHE PATENTSCHRIFT

(11) **EP 0 361 101 B2**
(45) Veröffentlichungstag und Bekanntmachung des Hinweises auf die Entscheidung über den Einspruch: **15.03.1995**
(45) Hinweis auf die Patenterteilung: 01.07.1992
(21) Anmeldenummer: 89115791.9
(22) Anmeldetag: 26.08.1989
(51) Int. Cl.: A47L 17/02

(54) **Bauteil, insbesondere Einbau-Spüle sowie Verfahren zu seiner Herstellung**
Component such as a fitted sink, and method for manufacturing the same
Pièce de construction, notamment évier à incorporer ainsi que procédé pour sa fabrication

(30) Priorität: 23.09.1988 DE 3832351
(43) Veröffentlichungstag der Anmeldung: 04.04.1990
(73) Patentinhaber: Schock & Co. GmbH, D-73614 Schorndorf (DE)
(72) Erfinder: Schock, Friedrich, D-7060 Schorndorf (DE)
(74) Vertreter: Hoeger, Stellrecht & Partner

(56) Entgegenhaltungen:
- GB-A- 1 298 801
- US-A- 3 078 249
- US-A- 3 433 860

## Beschreibung

Die Erfindung betrifft eine Einbauspüle, welche eine Sicht- und eine Rückseite besitzt und aus einer Masse besteht, die ein eine Matrix bildendes Harz und einen zumindest überwiegend von mineralischen Füllstoffpartikeln gebildeten Füllstoff enthält, welcher zumindest ungefähr 50 Gew.% der Masse bildet und dessen mineralische Füllstoffpartikel eine nicht-gebrochene Kornform besitzen. Ferner betrifft die Erfindung ein Verfahren zur Herstellung einer solchen Einbauspüle mit einer Form, welche einen der Gestalt der Einbauspüle entsprechenden Formhohlraum bildet und einen in letzteren mündenden Einfüllkanal sowie einen Entlüftungspfad für den Formhohlraum aufweist, wobei eine fließfähige Mischung aus einem aushärtbaren Harz und einem zumindest überwiegend von mineralischen Füllstoffpartikeln gebildeten Füllstoff über den Einfüllkanal in den Formhohlraum eingefüllt und dieser dabei über den Entlüftungspfad entlüftet wird, worauf das Harz ausgehärtet wird.

Die Firma Schock & Co. GmbH, D-7060 Schorndorf, fertigt Einbauspülen, welche durch die Werkstoffmarke SILACRON (eingetragenes Warenzeichen der Firma Schock & Co. GmbH) gekennzeichnet sind, Für die Herstellung dieser Einbauspülen wird eine fließfähige Mischung aus einer Lösung von Polymethylmethacrylat in Methylmethacrylat und einem Füllstoff aus SiO₂-Partikeln hergestellt, wobei der Füllstoffanteil 62 - 66 Gew.% beträgt und als Füllstoff Quarz verwendet wird, der zuvor in einem Ofen zu Cristobalit umkristallisiert und dann gemahlen wurde, so daß der überwiegende Teil der Füllstoffpartikel eine Größe von 5 - 50 »m besitzt. Nach dem Füllen des Formhohlraums der verwendeten Form wird diese zum Polymerisieren des Harzes beheizt.

Trotz des großen Markterfolges z. B. der SILACRON-Einbauspülen der Firma Schock & Co. GmbH besteht der Wunsch, Einbauspülen der eingangs erwähnten Art zu schaffen, die in mindestens einer Eigenschaft den SILACRON-Produkten überlegen sind, z. B. hinsichtlich der Anfälligkeit gegen das Entstehen sichtbarer Kratzer oder nicht mehr entfernbarer Flecken auf der Sichtseite der Einbauspüle.

Aus der US-A-3 078 249 ist ein gegossenes Bauteil z. B. in Form einer Wanne bekannt geworden, wobei für eine bevorzugte Ausführungsform Füllstoffpartikel mit nicht-gebrochener Kornform in Form von Sand mit einer Partikelgröße von ca. 0,6 mm und als Harz Polyesterharz verwendet werden, welches in einem nicht-flüchtigen, monomeren, vernetzenden Lösungsmittel gelöst ist. Bei einer Ausführungsform dieses bekannten Bauteils enthält die für seine Herstellung verwendete Masse ungefähr 83 Gew.% Füllstoffpartikel in Form von Sand, und für die Herstellung flacher Bauteile, wie Fliesen, wird empfohlen, auf die Oberflächen des Bauteils vor dem Aushärten der Masse eine Schicht feinen Sandes aufzubringen, um die Neigung des Bauteils, sich beim Aushärten der Masse zu verwerfen oder zu verziehen, zu vermindern.

Um nun die Gebrauchseigenschaften von Einbauspülen welche eine Sicht- bzw. Gebrauchsseite und eine Rückseite besitzen, gegenüber den geschilderten bekannten Einbauspülen zu verbessern, wird gemäß der Erfindung vorgeschlagen, eine Einbauspüle der eingangs erwähnten Art so auszubilden, daß der überwiegende Teil der mineralischen Füllstoffpartikel eine Größe von ca. 0,1 mm bis ca. 2 mm aufweist, daß der Füllstoff ungefähr 50 - 85 Gew.% der Masse bildet, daß die mineralischen Füllstoffpartikel an ihrer Oberfläche eine Farbbeschichtung aufweisen und daß in den im Gebrauch stark beanspruchten Bereichen der Einbauspüle die Packungsdichte der mineralischen Füllstoffpartikel an der Sichtseite größer als an der Rückseite der Einbauspüle ist.

Durch die Verwendung verhältnismäßig großer mineralischer Füllstoffpartikel erhält die Einbauspüle eine strukturierte Sichtseite, d. h. Gebrauchsseite, weil die im wesentlichen aus Harz und Füllstoffpartikeln bestehende Masse beim Aushärten des Harzes im Oberflächenbereich der Einbauspüle zwischen den großen Füllstoffpartikeln stärker schrumpft, so daß sich zwischen den oberflächennahen großen Füllstoffpartikeln Mikromulden ausbilden, während bei den vorstehend geschilderten bekannten Einbauspülen die wesentlich kleineren Füllstoffpartikel zu einer glatten, hochglänzenden Oberfläche führen, an der Kratzer viel stärker sichtbar sind als an der strukturierten Oberfläche der erfindungsgemäßen Einbauspüle. Die verhältnismäßig großen Füllstoffpartikel mit ihrer nicht-gebrochenen Kornform haben wegen ihrer abgerundeten Kanten bzw. Oberflächen eine geschlossene Harzoberfläche auch an der Sichtseite der Einbauspüle sowie glatte Grenzflächen zwischen Harz und Füllstoffpartikeln zur Folge, was, wie sich gezeigt hat, dazu führt, daß die erfindungsgemäßen Einbauspülen im Gebrauch so gut wie niemals Flecken bekommen, wenn sie mit Farbstoffen, Fetten oder Ölen, Laugen und Säuren und dergleichen in Berührung kommen; außerdem tritt infolge der vorstehend aufgeführten Merkmale kein sogenannter Wasser-Weiß-Effekt (water whitening effect) auf, und zwar auch nicht bei einer Wechselbeanspruchung mit heißem und kaltem Wasser - letzteres und die Tatsache, daß die erfindungsgemäßen Einbauspülen kaum einmal Flecken bekommen, gilt auch dann, wenn die die oberflächennahen Füllstoffpartikel überziehende Harzschicht auf der Sicht- bzw. Gebrauchsseite der Einbauspüle durch Abrieb ganz oder teilweise entfernt wurde, was wohl auf die Größe der Füllstoffpartikel und deren abgerundete Oberflächen sowie die deshalb glatten Grenzflächen zwischen Füllstoffpartikeln und Harz zurückzuführen ist. Auch werden die an der Oberfläche der Einbauspüle zwischen den großen Füllstoffpartikeln zurückgeschrumpften Harzflächen bei einer Abriebbeanspruchung der Einbauspüle nicht verletzt, weil sie zwischen den Füllstoffpartikeln zurückgesetzt und damit geschützt liegen: daher ist die glatte und dichte Oberfläche leicht zu reinigen. Schließlich wirken der hohe Füllstoffanteil und die dadurch hervorgerufene hohe Viskosität der in eine Form eingefüllten Mischung aus Harz und Füllstoff der Neigung der Füllstoffpartikel zum Sedimentieren während der Handhabung der zu verarbeitenden Mischung entgegen Die höhere Packungsdichte der Füllstoffpartikel in den stark beanspruchten Bereichen der Sichtseite der Einbauspüle führt schließlich zu einer noch größeren Oberflächenhärte. Da die mineralischen Füllstoffpartikel an ihrer Oberfläche eine Farbbeschichtung besitzen, kann auf eine Einfärbung des die Matrix der Masse bildenden Harzes verzichtet werden; wenn nun die mineralischen Füllstoffpartikel - sieht man von dieser Farbbeschichtung ab - durchscheinend sind, so wie dies bei dem bevorzugten Füllstoff, nämlich kristallinem Quarzsand der Fall ist, führt ein Kratzer in der an der Partikeloberfläche vorhandenen Farbbeschichtung dazu, daß durch die freigelegte Füllstoffpartikeloberfläche und durch den transparenten Partikelkörper hindurch die Farbe der unbeschädigten Oberflächenbeschichtung durchschimmert, so daß ein Kratzer nicht als heller bis weißer Strich erscheint. Mit der erfindungsgemäßen Zusammensetzung lassen sich deshalb Einbauspülen herstellen, welche im Gebrauch eine Widerstandsfähigkeit zeigen, die bislang bei Kunststoff-Waschbecken und Kunststoff-Spülen völlig unbekannt war. Im Zusammenhang mit dem vorstehend erwähnten Zurückschrumpfen des Harzes zwischen den verhältnismäßig großen Füllstoffpartikeln an der Oberfläche einer erfindungsgemäßen Einbauspüle sei darauf hingewiesen, daß z. B. reines Acrylharz im Zuge des Aushärtens um 22% schrumpft. Die erfindungsgemäß als Füllstoff einzusetzenden, verhältnismäßig großen mineralischen Füllstoffpartikel mit nicht-gebrochener Kornform sind als äußerst billiges Naturprodukt erhältlich, da derartiger kristalliner Quarzsand bei der Kaolingewinnung als Nebenprodukt anfällt. Um der Neigung der Füllstoffpartikel zum Sedimentieren während der Handhabung der zu verarbeitenden Masse noch stärker entgegenzuwirken, empfiehlt es sich, der Mischung aus Harz und Füllstoffpartikeln ein Thixotropiermittel zuzusetzen - bei Acrylharz wirkt ein Anteil von in Methylmethacrylat gelöstem Polymethylmethacrylat als Thixotropiermittel, als solches können aber auch andere bekannte Stoffe verwendet werden, z. B. hochdisperse Kieselsäure. Durch die Verwendung verhältnismäßig großer Füllstoffpartikel mit nicht-gebrochener Kornform und einer Farbbeschichtung sowie durch den Einsatz eines nichteingefärbten Harzes läßt sich ein weiterer Nachteil vermeiden, den die vorstehend geschilderten bekannten Bauteile besitzen, wenn für deren Herstellung ein eingefärbtes Harz verwendet wird: Weil nämlich nahezu alle deckenden Farbstoffe das außerordentlich harte Titandioxyd enthalten, ergeben sich bei diesen bekannten Bauteilen Striche aus metallischem Abrieb, wenn ein metallischer Gegenstand über die Oberfläche eines solchen bekannten Bauteils gleitet, z. B. ein Besteckteil über den Boden eines Spülbeckens (sogenannter-Schreibeffekt).

Bei den im Gebrauch stark beanspruchten Bereichen einer Einbauspüle handelt es sich z. B. - wie bereits erwähnt - um die Bodenfläche eines Beckens, insbesonderes eines Spülbeckens, aber auch um die Abtropf- bzw. Arbeitsfläche einer Einbauspüle, wohingegen die Seitenwände z. B. eines Spülbeckens im Gebrauch keinen großen Beanspruchungen unterworfen sind.

Aus der GB-A-1 389 446 ist es bekannt, flache Bauteile, wie Fliesen, aus Füllstoffpartikel enthaltenden Wasser-expandierten Schaumkunststoffen herzustellen, bei denen die Füllstoffpartikel an der Sichtseite des Bauteils eine größere Packungsdichte als im Inneren des Bauteils aufweisen. Schaumkunststoffe sind aber für die Herstellung von Spülen völlig ungeeignet, da sie für diesen Verwendungszweck weder genügend widerstandsfähig, noch hinreichend fleckenresistent sind. Zur Herbeiführung einer größeren Packungsdichte der Füllstoffpartikel an der Sichtseite der Bauteile wird empfohlen, zwei flache Schichten mit ihren Rückseiten miteinander zu verbinden (sh. Seite 4, Zeilen 21 bis 24), so daß ein Laminat entsteht, an dessen beiden Hauptoberflächen der Kunststoff einen höheren Füllgrad an Füllstoffpartikeln aufweist. Bei diesen bekannten Bauteilen können die Füllstoffpartikel farbig sein, dann soll es sich jedoch um gefärbte Glaskugeln mit einem Durchmesser von 15 mm handeln.

Der Prospekt "GRANUCOL" der Firma DORFNER lehrt schließlich die Verwendung von "Farbsand" als mineralischer Füllstoff für im Baugewerbe zu verwendenden Gießmassen, nämlich für die Herstellung von Fußbodenbeschichtungen, Strukturputzen und Dachbahnen. Die GRANUCOL-Füllstoffteilchen werden aus ungefärbtem Kristallquarzsand hergestellt, welcher mit Bindemittel und Farbpigmenten gemischt wird, so daß es sich bei den so hergestellten farbigen Füllstoffteilchen jeweils um ein Agglomerat handelt, in dem innere Grenzflächen vorhanden sind. Die farbigen GRANUCOL-Füllstoffteilchen sollen zwar eine kantengerundete Form besitzen, bei den zu ihrer Herstellung verwendeten ungefärbten mineralischen Füllstoffpartikeln handelt es sich jedoch um Quarzmehl, dessen Partikel keine nicht-gebrochene Kornform besitzen. In diesem Prospekt wird vielmehr als Füllstoff für Sanitärteile das Material DORSILIT empfohlen, bei dem es sich um umgefärbtes Quarzmehl handelt.

Als besonders zweckmäßig hat es sich erwiesen, wenn die Farbbeschichtung der Füllstoffpartikel erfindungsgemäßer Einbauspülen mindestens ein Farbpigment und als Bindemittel mindestens ein Silikat, insbesondere ein Alkalisilikat, oder einen Kunststoff, insbesondere Polyurethan, Methacrylat oder Epoxidharz enthält- vor allem Natriumsilikat stellt einen guten Haftvermittler zwischen den Füllstoffpartikeln und dem die Matrix bildenden Harz dar.

Besonders gute Eigenschaften haben solche erfindungsgemäßen Einbauspülen, für deren Herstellung als Füllstoff mineralische Füllstoffpartikel mit einer solchen Siebkurve verwendet wurden, daß der überwiegende Teil der mineralischen Füllstoffpartikel eine Größe von ca. 0,1 mm bis ca. 1 mm aufweist, und noch besser ist es, wenn ca. 70 - 85 %, insbesondere ca. 80 %, der mineralischen Füllstoffpartikel eine Größe von ca. 0,1 mm bis ca. 0,4 mm aufweisen.

Wie sich aus dem Vorstehenden bereits ergibt, wird ein möglichst hoher Füllstoffanteil angestrebt, wobei sich besonders solche Ausführungsformen bewährt haben, bei denen der Füllstoff mindestens ca. 73 Gew.% der Masse bildet - mehr als ca. 76 Gew.% lassen sich in der Praxis unter wirtschaftlichen Bedingungen jedoch kaum verwirklichen.

Als im Gebrauch besonders vorteilhaft haben sich erfindungsgemäße Einbauspülen erwiesen, bei denen die Harz-Matrix aus Polymethylmethacrylat besteht; sehr gut geeignet sind aber auch Polyester und Epoxidharz.

Ein weiterer, durch die Größe und/oder die Dichte der Silikatpartikel steuerbarer Parameter für die zur Herstellung erfindungsgemäßer Einbauspülen verwendete Masse ist der sogenannte Taberabrieb, zu dessen Ermittlung mittels eines genormten rotierenden Schleiftellers unter genormten Bedingungen Material von der Oberfläche der Einbauspüle abgetragen und dasjenige abgetragene Material gewogen wird, das sich durch eine bestimmte Anzahl von Umdrehungen des Schleiftellers ergibt. Bevorzugt werden erfindungsgemäße Einbauspülen aus einer Masse, die zu einem Taberabrieb an der Sichtseite in den im Gebrauch stark beanspruchten Bereiches der Einbauspüle führt, welcher unter 4 mg/100 r liegt, vorzugsweise höchstens ca. 3,5 mg/100 r beträgt und insbesondere zwischen ca. 3,5 und ca. 3,0 mg/100 r liegt. Zum Vergleich sei erwähnt, daß bei Einbauspülen aus dem eingangs diskutierten Material SILACRON der Taberabrieb etwa doppelt so groß ist wie bei einer erfindungsgemäßen Einbauspüle.

Um auf einfache Weise zu erreichen, daß in den im Gebrauch stark beanspruchten Bereichen einer erfindungsgemäßen Einbauspüle die Packungsdichte der mineralischen Füllstoffpartikel an der Sichtseite größer als an der Rückseite der Einbauspüle ist, wird diese zweckmäßigerweise durch ein Verfahren der eingangs erwähnten Art hergestellt, bei welchem erfindungsgemäß die Form zum Aushärten des Harzes in einer Aushärtungslage gehalten wird, in der die Sichtseite der im Gebrauch stark beanspruchten Bereiche der Einbauspüle nach unten gerichtet ist Hält man die Form in dieser über einen Zeitraum, der zumindest kurz vor dem Einsetzen des Aushärtens des Harzes beginnt und endet, wenn das Harz wenigstens weitgehend ausgehärtet ist so können sich die Füllstoffpartikel aufgrund der Schwerkraft nach unten absetzen und führen so an der Sichtseite der erwähnten Bereiche zu einem höheren Füllstoffanteil in der Masse. In diesem Zusammenhang sei darauf hingewiesen, daß z. B. bei einer Einbauspüle mit einem Spülbecken und einer Arbeits- oder Abtropffläche die im Gebrauch stark beanspruchten Bereiche, nämlich der Beckenboden und die Arbeits- oder Abtropffläche, zumindest nahezu parallel zueinander verlaufen. Da die Viskosität der in die Form einzufüllenden Masse temperaturabhängig ist und die Tendenz der Füllstoffpartikel zum Sedimentieren mit der Verminderung der Viskosität zunimmt, empfiehlt es sich, die Form mindestens an den gegen die Sichtseite der Einbauspüle anliegenden Flächen zu beheizen und insbesondere auf eine Temperatur zwischen 70°C und 90°C, vorzugsweise auf eine Temperatur von ca. 80°C, zu erwärmen, ehe die fließfähige Mischung in die Form eingefüllt wird. Erfindungsgemäß kann dann die Masse so zusammengesetzt werden, daß sie vor und während des Einfüllens thixotrop bleibt in der Form vor dem Aushärten aber durch temperaturbedingte Verminderung der Viskosität ein Sedimentieren der Füllstoffpartikel zuläßt. Wenn dann der Polymerisationsvorgang einsetzt, steigt die Viskosität stark an, so daß das Sedimentieren des Füllstoffs beendet wird.

Die Maßnahme, bei der Herstellung eines gegossenen Bauteils die Form während des Aushärtens des Harzes in einer Lage zu halten, in der die Sichtseite des Bauteils nach unten weist, ist zwar aus der US-A-3 078 249 an sich bekannt jedoch zu einem völlig anderen Zweck, nachdem dieser Stand der Technik vorschlägt, die Oberflächen des Bauteils vor dem völligen Aushärten des Harzes mit einer Schicht feinen Sandes zu beschichten.

Bei einer bevorzugten Ausführungsform des erfindungsgemäßen Verfahrens wird die Form zum Befüllen des Formhohlraums mit der fließfähigen Mischung in eine Befüllage gebracht, in der die durch den Einfüllkanal eingebrachte Mischung die Luft aus dem Formhohlraum durch den Entlüftungspfad vollständig verdrängen kann, worauf die Form in die Aushärtungslage gedreht wird.

Vor allem beim Herstellen farbiger Einbauspülen sollte man nach Möglichkeit vermeiden, daß die fließfähige Mischung beim Befüllen des Formhohlraums Teilströme bildet, die irgendwo innerhalb des Formhohlraums aufeinander treffen, weil sich sonst in der fertigen Einbauspüle sichtbare Fließ- oder Strömungslinien ergeben können. Deshalb wird empfohlen, die Befüllage und die Anordnung des Einfüllkanals so zu wählen, daß beim Befüllen des Formhohlraums in diesem keine aufeinandertreffenden Ströme der fließfähigen Mischung entstehen können.

Damit die im wesentlichen aus Füllstoffen und Harz bestehende Mischung beim Aushärten des letzteren im wesentlichen nur von derjenigen Wand des Formhohlraums wegschrumpft, die der Rückseite der Einbauspüle benachbart ist, wird schließlich empfohlen, zum Aushärten des Harzes die Form an den gegen die Sichtseite der Einbauspüle anliegenden Flächen zuerst zu beheizen und/oder auf eine höhere Temperatur aufzuheizen als an den gegen die Rückseite der Einbauspüle anliegenden Formflächen; dann beginnt nämlich der Aushärtungsvorgang an der späteren Sichtseite der Einbauspüle, und die Mischung aus Füllstoff und Harz bildet dort eine harte Schicht, ehe die eigentliche Volumenschrumpfung von z. B. 8 - 10 Vol.% einsetzt - wie sich aus den vorstehenden Erläuterungen ergibt, findet dann an der Sichtseite ein Schrumpfen nur in den Mikrobereichen zwischen den Füllstoffpartikeln statt, so daß sich eine Einbauspüle mit formgetreuer Sichtseite ergibt. Dies gilt um so mehr, als die Füllstoffpartikel an der Sichtseite der Einbauspüle angereichert sind.

Im folgenden wird die Erfindung anhand einiger bevorzugter Ausführungsformen noch näher erläutert; diesem Zweck dient auch die beigefügte Zeichnung. Diese zeigt Schnitte durch zwei verschiedene Formen für die Herstellung von Spülbecken, und zwar in
Figur 1 eine erste Form in der Befüllage;
Figur 2 eine zweite Form in der Befüllage, und in
Fig. 3 die zweite Form in der Aushärtungslage.

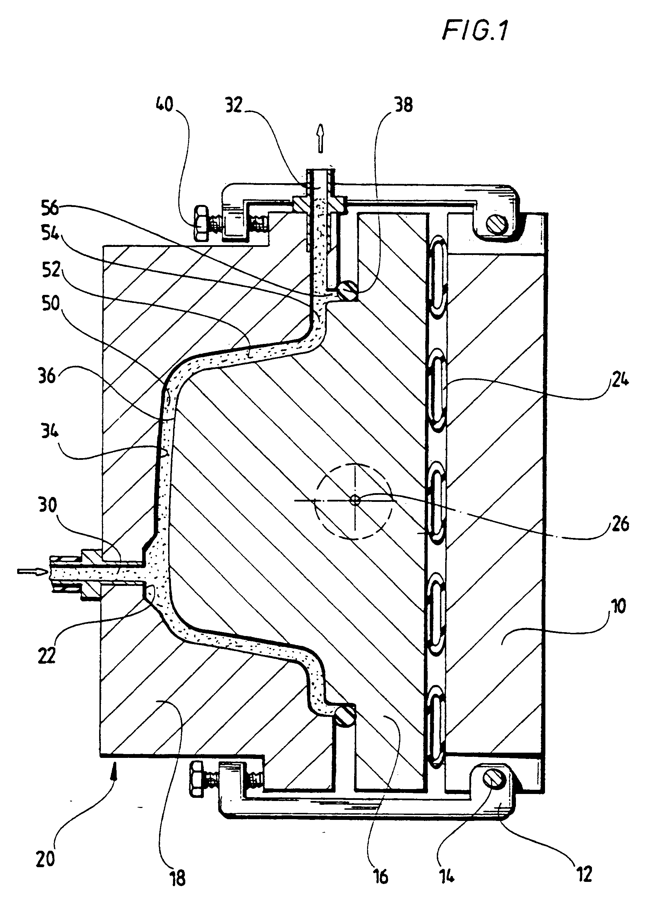

Die Fig. 1 zeigt einen Grundrahmen 10, an dem mehrere Halteklammern 12 um Achsen 14 schwenkbar angebracht sind. Der Grundrahmen 10 trägt eine aus zwei Formhälften 16 und 18 bestehende Form 20, die einen Formhohlraum 22 bildet und von den Halteklammern 12 gegen flexible Druckkörper 24 gepreßt wird, die mit Preßluft oder einem anderen komprimierbaren Druckmedium gefüllt sind und über die sich die Form 20 auf dem Grundrahmen 10 abstützt. Dieser ist über nicht dargestellte Mittel um eine Schwenkachse 26 drehbar, die senkrecht zur Zeichnungsebene der Fig. 1 verläuft.

Die Formhälfte 18 besitzt einen Einfüllkanal 30 und einen Entlüftungskanal 32, die beide in den Formhohlraum 22 münden und über nicht dargestellte Ventile verschließbar sind. Der Formhohlraum 22 wird einerseits von einer von der Formhälfte 18 gebildeten Rückseitenformfläche 34 sowie einer von der Formhälfte 16 gebildeten Sichtseitenformfläche 36 und andererseits von einer umlaufenden, in sich geschlossenen Dichtung 38 begrenzt, wobei sich die Dichtflächenpressung im Bereich der Dichtung 38 durch Einstellschrauben 40 einstellen läßt, die in Gewindebohrungen der Halteklammern 12 gehalten sind und gegen eine Stufe der Formhälfte 18 anlegen.

Das mit Hilfe der in Fig. 1 gezeigten Form 20 herzustellende Spülbecken weist einen Beckenboden 50, Beckenseitenwände 52, einen umlaufenden Flansch 54 und einen hochgestellten umlaufenden Rand 56 auf.

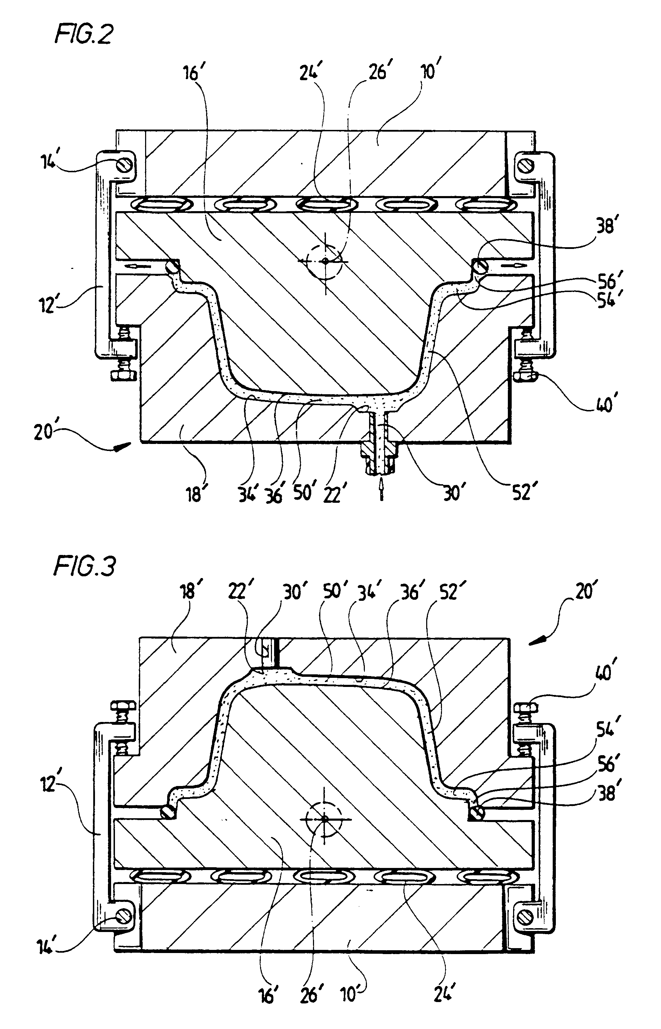

Zum Befüllen der Form 20 mit der erfindungsgemäßen fließfähigen Mischung aus einem aushärtbaren Harz und einem zumindest überwiegend von Quarzpartikeln gebildeten Füllstoff über den Einfüllkanal 30 wird der Entlüftungskanal 32 geöffnet und die Form in die in Fig. 1 gezeigte Position gebracht. Erfindungsgemäß mündet der Einfüllkanal 30 in die Rückseitenformfläche 34 im Bereich des Beckenbodens 50; die in den Formhohlraum 22 gepumpte fließfähige Mischung fließt dann zunächst über die in der Befüllage unten liegende Beckenseitenwand nach unten bis in den unten liegenden Bereich des Rands 56, so daß die dort befindliche Luft nicht im Formhohlraum eingeschlossen wird, sondern nach der Seite zu entweichen und über die nicht dargestellten, nach oben verlaufenden seitlichen Bereiche des Rands 56 und den oberen Bereich des Rands 56 sowie den Entlüftungskanal 32 den Formhohlraum 22 verlassen kann. Erfindungsgemäß wird eine solche Menge der fließfähigen Mischung in den Formhohlraum 22 gepumpt, daß ein geringer Teil der Mischung aus dem Entlüftungskanal 32 austritt. Dann werden der Einfüllkanal 30 und der Entlüftungskanal 32 geschlossen und die Vorrichtung um die Schwenkachse 26 in die Aushärtungslage gedreht, die für die zweite Form in Fig. 3 dargestellt ist.

Die Gestaltung der Form und die Befüllage, wie sie in Fig. 1 gezeigt sind, eignen sich auch für die Herstellung von Spülbecken, die in Abwandlung der dargestellten Ausführungsform einen nach unten, d.h. in Richtung zum Beckenboden, abgewinkelten Rand 56 besitzen, weil auch in einem solchen Fall die Luft aus dem den Rand 56 definierenden Bereich des Formhohlraums 22 nach der Seite zu und nach oben entweichen kann. Dies trifft für die in Fig. 2 gezeigte Befüllage nicht zu.

Für die Ausführungsform nach den Figuren 2 und 3 wurden dieselben Bezugszeichen wie in Fig. 1 verwendet, jedoch unter Hinzufügung eines Strichs. Die Form 20' besitzt zwar einen Einfüllkanal 30', jedoch keinen besonderen Entlüftungskanal, da in der in Fig. 2 gezeigten Befüllage der Formhohlraum 22' an der Dichtung 38' vorbei entlüftet werden kann. Hierzu ist es lediglich zweckmäßig, während des Befüllens des Formhohlraums die Einstellschrauben 40' soweit zu lockern, daß die Luft zwischen der Dichtung 38' und den beiden Formhälften 16' und 18' entweichen kann. Es kann auch vorteilhaft sein, zwischen die Dichtung 38' und eine oder beide Formhälften 16', 18' einen Streifen eines Vliesstoffes einzulegen, durch den hindurch zwar die Luft entweichen kann, jedoch nicht die in den Formhohlraum hineingepumpte fließfähige Mischung aus Harz und Füllstoff.

Wie bereits erwähnt, zeigt die Fig. 3 die Aushärtungslage, in der die Sichtseiten des Beckenbodens 50 und des Flanschs 54 nach unten gerichtet sind.

Beheiz- und Kühlvorrichtungen für die Formen 20 und 20' wurden nicht dargestellt, da es sich dabei um Elemente handelt, die aus der Herstellung von Gegenständen aus gefüllten Kunststoffen bekannt sind,

Im folgenden soll noch eine bevorzugte Zusammensetzung der verarbeiteten fließfähigen Mischung beschrieben werden:
74 bis 76 Gew.% kristalliner Quarzsand;
24 bis 26 Gew.% einer Lösung von Polymethylmethacrylat in Methylmethacrylat, wobei der Anteil des Polymethylmethacrylats an dieser Lösung 18 bis 25 % beträgt.

1,2 Gew.%(bezogen auf das Harz) eines peroxydischen Katalysators;
0.2 bis 0.4 % eines Haftvermittlers, welcher auch schon als Beschichtung auf den Füllstoffpartikeln vorhanden sein kann;
2 % eines Quervernetzungsmittels.

Als mineralische Füllstoffpartikel eignen sich alle Mineralien, die eine hinreichend große Härte besitzen.

## Patentansprüche

1. Einbauspüle, welche eine Sicht- und eine Rückseite besitzt und aus einer Masse besteht, die ein eine Matrix bildendes Harz und einen zumindest überwiegend von mineralischen Füllstoffpartikeln gebildeten Füllstoff enthält, welcher ungefähr 50 bis 85 Gew. % der Masse bildet und dessen mineralische Füllstoffpartikel eine nicht-gebrochene Kornform besitzen und an ihrer Oberfläche eine Farbbeschichtung aufweisen, wobei der überwiegende Teil der mineralischen Füllstoffpartikel eine Größe von ca. 0,1 mm bis 2 mm aufweist und in den im Gebrauch stark beanspruchten Bereichen der Einbauspüle die Packungsdichte der mineralischen Füllstoffpartikel an der Sichtseite der Einbauspüle größer als an deren Rückseite ist.

2. Einbauspüle Anspruch 1, dadurch gekennzeichnet, daß die mineralischen Füllstoffpartikel kristalliner Quarzsand sind.

3. Einbauspüle nach Anspruch 1 oder 2, dadurch gekennzeichnet, daß die Farbbeschichtung mindestens ein Farbpigment und als Bindemittel mindestens ein Silikat, insbesondere ein Alkalisilikat, oder einen Kunststoff, insbesondere Polyurethan, Methacrylat oder Epoxidharz, enthält

4. Einbauspüle nach einem der vorstehenden Ansprüche, dadurch gekennzeichnet, daß der überwiegende Teil der mineralischen Füllstoffpartikel eine Größe von ca. 0.1 mm bis ca. 1 mm aufweist.

5. Einbauspüle nach Anspruch 4, dadurch gekennzeichnet, daß ca. 70 bis 85 % der mineralischen Füllstoffpartikel eine Größe von ca. 0.1 mm bis ca. 0.4 mm aufweisen.

6. Einbauspüle nach einem der vorstehenden Ansprüche, dadurch gekennzeichnet, daß der Füllstoff ca. 70 bis 80 Gew. % der Masse bildet.

7. Einbauspüle nach Anspruch 6, dadurch gekennzeichnet, daß der Füllstoffmindestens ca. 73 Gew. % der Masse bildet.

8. Einbauspüle nach einem oder mehreren vorstehenden Ansprüche, dadurch gekennzeichnet, daß die Matrix farblos ist.

9. Einbauspüle nach einem oder mehreren der vorstehenden Ansprüche, dadurch gekennzeichnet, daß an der Sichtseite zumindest nahezu alle Füllstoffpartikel mit einer dünnen Schicht des die Matrix bildenden Harzes überzogen sind.

10. Einbauspüle nach einem oder mehreren der vorstehenden Ansprüche, dadurch gekennzeichnet, daß die Sichtseite eine Oberflächenstruktur aufweist, indem das die Matrix bildende Harz zwischen den mineralischen Füllstoffpartikeln kleine Vertiefungen bildet.

11. Einbauspüle nach einem oder der vorstehenden Ansprüche, dadurch gekennzeichnet, daß die Harz-Matrix aus Polymethylmethacrylat besteht.

12. Einbauspüle nach einem oder der vorstehenden Ansprüche, dadurch gekennzeichnet, daß der Taberabrieb an der Sichtseite in den im Gebrauch stark beanspruchten Bereichen des Bauteils unter 4mg/100 r beträgt.

13. Einbauspüle nach Anspruch 12, dadurch gekennzeichnet, daß der Taberabrieb an der Sichtseite in den im Gebrauch stark beanspruchten Bereichen des Bauteils höchstens ca. 3.5 mg/100 r beträgt.

14. Einbauspüle nach Anspruch 12, dadurch gekennzeichnet, daß der Taberabrieb an der Sichtseite in den im Gebrauch stark beanspruchten Bereichen des Bauteils zwischen ca. 3.5 und ca. 3.0 mg/100 r liegt.

15. Verfahren zur Herstellung einer eine Sicht- und eine Rückseite aufweisenden Einbauspüle nach einem oder mehreren der Ansprüche 1 bis 14, mit einer Form, welche einen der Gestalt der Einbauspüle entsprechenden Formhohlraum bildet und einen in letzteren mündenden Einfüllkanal sowie einen Entlüftungspfad für den Formhohlraum aufweist, wobei eine fließfähige Mischung aus einem aushärtbaren Harz und einem zumindest überwiegend von mineralischen Füllstoffpartikeln gebildeten Füllstoff über den Einfüllkanal in den Formhohlraum eingefüllt und dieser dabei über den Entlüftungspfad entlüftet wird, worauf das Harz ausgehärtetwird, dadurch gekennzeichnet, daß die Form zum Aushärten des Harzes in einer Aushärtungslage gehalten wird, in der die Sichtseite der im Gebrauch stark beanspruchten Bereiche der Einbauspüle nach unten gerichtet ist.

16. Verfahren nach Anspruch 15, dadurch gekennzeichnet, daß als Silikatpartikel ein kristalliner Quarzsand mit nicht-gebrochener Kornform verwendet wird.

17. Verfahren nach Anspruch 15 oder 16, gekennzeichnet durch die Verwendung einer fließfähigen Mischung mit den Merkmalen eines oder mehrerer der Ansprüche 6 bis 12.

18. Verfahren nach einem oder mehreren der Ansprüche 15 bis 17, dadurch gekennzeichnet, daß die fließfähige Mischung ein Thixotropiermittel enthält.

19. Verfahren nach einem oder mehreren der Ansprüche 15 bis 17, dadurch gekennzeichnet, daß die fließfähige Mischung als Harz eine Lösung eines Polymers in einem Monomer enthält, insbesondere eine Lösung von Polymethylmethacrylat in Methylmethacrylat.

20. Verfahren nach einem oder mehreren der Ansprüche 15 bis 19, dadurch gekennzeichnet, daß die Form zum Befüllen des Formhohlraums mit der fließfähigen Mischung in eine Befüllage gebracht wird, in der die durch den Einfüllkanal eingebrachte Mischung die Luft aus dem Formhohlraum durch den Entlüftungspfad vollständig verdrängen kann, worauf die Form in die Aushärtungslage gedreht wird.

21. Verfahren nach Anspruch 20, dadurch gekennzeichnet, daß die Befüllage und die Anordnung des Einfüllkanals so gewälht werden, daß beim Befüllen des Formhohlraums in diesem keine aufeinandertreffenden Ströme der fließfähigen Mischung entstehen können.

22. Verfahren nach einem oder mehreren der Ansprüche 15 bis 21, dadurch gekennzeichnet, daß zum Aushärten des Harzes der fließfähigen Mischung die Form an den gegen die Sichtseite der Einbauspüle anliegenden Flächen zuerst beheizt und/oder auf eine höhere Temperatur aufgeheizt wird als an den gegen die Rückseite der Einbauspüle anliegenden Formflächen.

23. Verfahren nach einem oder mehreren der Ansprüche 15 bis 22, dadurch gekennzeichnet daß die Form mindestens an den gegen die Sichtseite der Einbauspüle anligenden Flächen beheizt, insbesondere auf eine Temperatur zwischen 70°C und 90°C erwärmt wird, ehe die fließfähige Mischung in die Form eingefüllt wird.

## Claims

1. Built-in sink having a visible side and a rear side and consisting of a compound containing a resin forming a matrix and a filler formed at least predominantly of mineral filler particles, the filler constituting approximately 50 to 85 % by weight of the compound and its mineral filler particles having an unbroken grain shape and a colour coating on their surface, wherein the predominant portion of the mineral filler particles has a size of approximately 0.1 mm to 2 mm and in the regions of the built-in sink subject to severe wear and tear during use, the packing density of the mineral filler particles is greater on the visible side of the built-in sink than on its rear side.

2. Built-in sink as defined in claim 1, characterized in that the mineral filler particles are crystalline quartz sand.

3. Built-in sink as defined in claim 1 or 2, characterized in that the colour coating contains at least one colour pigment and as binding agent at least one silicate, in particular an alkali silicate, or a plastic, in particular polyurethane, methacrylate or epoxy resin.

4. Built-in sink as defined in any of the preceding claims, characterized in that the predominant portion of the mineral filler particles has a size of approximately 0.1 mm to approximately 1 mm.

5. Built-in sink as defined in claim 4, characterized in that approximately 70 to 85 % of the mineral filler particles have a size of approximately 0.1 mm to approximately 0.4 mm.

6. Built-in sink as defined in any of the preceding claims, characterized in that the filler constitutes approximately 70 to 80 % by weight of the compound.

7. Built-in sink as defined in claim 6, characterized in that the filler constitutes at least approximately 73 % by weight of the compound.

8. Built-in sink as defined in one or more of the preceding claims, characterized in that the matrix is colourless.

9. Built-in sink as defined in one or more of the preceding claims, characterized in that, on the visible side, at least almost all of the filler particles are coated with a thin layer of the resin forming the matrix.

10. Built-in sink as defined in one or more of the preceding claims, characterized in that the visible side has a surface structure due to the resin constituting the matrix forming small depressions between the mineral filler particles.

11. Built-in sink as defined in one or more of the preceding claims, characterized in that the resin matrix consists of polymethyl methacrylate.

12. Built-in sink as defined in one or more of the preceding claims, characterized in that the Taber abrasion value on the visible side in the regions of the component subject to severe wear and tear during use is below 4 mg/100 r.

13. Built-in sink as defined in claim 12, characterized in that the Taber abrasion value on the visible side in the regions of the component subject to severe wear and tear during use is at the most approximately 3.5 mg/100 r.

14. Built-in sink as defined in claim 12, characterized in that the Taber abrasion value on the visible side in the regions of the component sink subject to severe wear and tear during use is between approximately 3.5 and approximately 3.0 mg/100 r.

15. Method for manufacturing a built-in sink having a visible side and a rear side as defined in one or more of claims 1 to 14, with a mold forming a mold cavity corresponding to the shape of the built-in sink and comprising a filling channel opening into the mold cavity as well as a venting duct for the mold cavity, a flowable mixture consisting of a hardenable resin and a filler formed at least predominantly of mineral filler particles being introduced into the mold cavity via the filling channel and this cavity hereby being vented via the venting duct, whereupon the resin is hardened, characterized in that for hardening the resin the mold is held in a hardening position in which the visible side of the regions of the built-in sink subject to severe wear and tear during use faces downwards.

16. Method as defined in claim 15, characterized in that a crystalline quartz sand with an unbroken grain shape is used as silicate particles.

17. Method as defined in claim 15 or 16, characterized by the use of a flowable mixture having the features of one or more of claims 1 to 12.

18. Method as defined in one or more of claims 15 to 17, characterized in that the flowable mixture contains a thixotropic agent.

19. Method as defined in one or more of claims 15 to 18, characterized in that the flowable mixture contains as resin a solution of a polymer in a monomer, in particular a solution of polymethyl methacrylate in methyl methacrylate.

20. Method as defined in one or more of claims 15 to 19, characterized in that for filling the mold cavity with the flowable mixture the mold is brought into a filling position in which the mixture introduced through the filling channel can completely displace the air from the mold cavity through the venting duct, whereupon the mold is turned into the hardening position.

21. Method as defined in claim 20, characterized in that the filling position and the arrangement of the filling channel are selected such that during filling of the mold cavity no streams of flowable mixture impinging on one another can result herein.

22. Method as defined in one or more of claims 15 to 21, characterized in that for hardening the resin of the flowable mixture the mold is first of all heated at the surfaces resting against the visible side of the built-in sink and/or heated up to a higher temperature than at the mold surfaces resting against the rear side of the built-in sink.

23. Method as defined in one or more of claims 15 to 22, characterized in that the mold is heated at least at the surfaces resting against the visible side of the built-in sink, in particular to a temperature of between 70°C and 90°C, before the flowable mixture is introduced into the mold.

## Revendications

1. Evier à encastrer qui comporte un côté visible et un côté arrière et qui est constitué par une masse comportant une résine formant une matrice et une charge de remplissage qui est formée au moins principalement par des particules minérales de charge de remplissage, qui forme approximativemnet 50 à 85 % en poids de la masse et dont les particules minérales de charge de remplissage ont une forme de grain non brisé et présentent à leur surface une enduction de couleur, dans lequel la partie dominante des particules minérales de charge de remplissage présente une grosseur d'approximativement 0,1 mm à 2 mm et dans lequel, dans des zones de l'évier à encastrer qui sont fortement sollicitées en cours d'utilisation, le degré de tassement des particules minérales de charge de remplissage est supérieur sur le côté visible de l'évier à encastrer à celui sur son côté arrière.

2. Evier à encastrer suivant la revendication 1, caractérisé en ce que les particules minérales de charge de remplissage sont du sable siliceux cristallin.

3. Evier à encastrer suivant l'une ou l'autre des revendications 1 et 2, caractérisé en ce que l'enduction de couleur comporte au moins un pigment coloré et, en tant que liant, au moins un silicate, en particulier du polyuréthanne, du méthacrylate ou une résine époxy.

4. Evier à encastrer suivant l'une quelconque des revendications précédentes, caractérisé en ce que la partie dominante des particules minérales de charge de remplissage présente une grosseur comprise entre approximativement 0,1 mm et approximativement 1 mm.

5. Evier à encastrer suivant la revendication 4, caractérisé en ce qu'approximativement 70 à 85 % des particules minérales de charge de remplissage présentent une grosseur comprise entre approximativement 0,1 mm et approximativement 0,4 mm.

6. Evier à encastrer suivant l'une quelconque des revendications précédentes, caractérisé en ce que la charge de remplissage forme approximativement 70 à 80 % en poids de la masse.

7. Evier à encastrer suivant la revendication 6, caractérisé en ce que la charge de remplissage forme au moins approximativement 73 % en poids de la masse.

8. Evier à encastrer suivant l'une ou plusieurs des revendications précédentes, caractérisé en ce que la matrice est incolore.

9. Evier à encastrer suivant l'une ou plusieurs des revendications précédentes, caractérisé en ce que, sur le côté visible, au moins à peu près toutes les particules de charge de remplissage sont recouvertes par une mince couche de la résine qui forme la matrice.

10. Evier à encastrer suivant l'une ou plusieurs des revendications précédentes, caractérisé en ce que le côté visible présente une structure de surface dans laquelle la résine qui forme la matrice forme des petits renfoncements entre les particules minérales de charge de remplissage.

11. Evier à encastrer suivant l'une ou plusieurs des revendications précédentes, caractérisé en ce que la matrice de résine est constituée par du polyméthacrylate de méthyle.

12. Evier à encastrer suivant l'une ou plusieurs des revendications précédentes, caractérisé en ce que l'abrasion Taber du côté visible est en dessous de 4 mg/100tr dans les zones de l'élément de construction fortement sollicitées à l'usage.

13. Evier à encastrer suivant la revendication 12, caractérisé en ce que l'abrasion Taber sur le côté visible s'élève au maximum à approximativement 3,5 mg/100tr dans les zones de l'élément de construction fortement sollicitées à l'usage.

14. Evier à encastrer suivant la revendication 12, caractérisé en ce que l'abrasion Taber sur le côté visible est située entre approximativement 3,5 et approximativement 3,0 mg/100tr dans les zones de l'élément de construction fortement sollicitées à l'usage.

15. Procédé de fabrication d'un évier à encastrer présentant un côté visible et un côté arrière, suivant l'une ou plusieurs des revendications 1 à 14, avec un moule qui forme un espace creux de moule correspondant à la configuration de l'évier à encastrer et qui présente un canal de remplissage débouchant dans cet espace ainsi qu'une voie d'évent de l'espace creux de moule, le mélange coulant constitué par une résine durcissable et par une charge de remplissage formée au moins principalement par des particules minérales de charge de remplissage étant introduit par le canal de remplissage dans l'espace creux de moule et ce dernier étant purgé alors par la voie d'évent, la résine étant ensuite durcie, caractérisé en ce que le moule est maintenu, pour le durcissement de la résine, dans une position de durcissement dans laquelle le côté visible des zones de l'évier à encastrer fortement sollicitées à l'usage est dirigé vers le bas.

16. Procédé suivant la revendication 15, caractérisé en ce qu'on utilise en tant que particules de silicate un sable siliceux cristallin à forme de grain non brisé.

17. Procédé suivant l'une ou l'autre des revendications 15 et 16, caractérisé par l'utilisation d'un mélange coulant comportant les particularités d'une ou de plusieurs des revendications 6 à 12.

18. Procédé suivant l'une ou plusieurs des revendications 15 à 17, caractérisé en ce que le mélange coulant contient un milieu thixotrope.

19. Procédé suivant l'une ou plusieurs des revendications 15 à 18, caractérisé en ce que le mélange coulant contient en tant que résine, une solution d'un polymère dans un monomère, en particulier une solution de polyméthacrylate de méthyle dans du méthacrylate de méthyle.

20. Procédé suivant l'une ou plusieurs des revendications 15 à 19, caractérisé en ce que, pour le remplissage de l'espace creux de moule avec le mélange coulant, le moule est placé dans une position de remplissage dans laquelle le mélange introduit par le canal de remplissage peut refouler complètement l'air hors de l'espace creux de moule, au travers de la voie d'évent, le moule étant ensuite tourné dans la position de durcissement.

21. Procédé suivant la revendication 20, caractérisé en ce que la position de remplissage et l'agencement du canal de remplissage sont choisis de façon que, lors du remplissage de l'espace creux de moule, il ne peut pas y avoir d'écoulements de mélange coulant qui s'atteignent mutuellement.

22. Procédé suivant l'une ou plusieurs des revendications 15 à 21, caractérisé en ce que, pour le durcissement de la résine du mélange coulant, le moule, sur les faces en appui contre le côté visible de l'évier à encastrer, est d'abord chauffé et/ou chauffé à une température supérieure à celle des faces de moule en appui contre la face arrière de l'évier à encastrer.

23. Procédé suivant l'une ou plusieurs des revendications 15 à 22, caractérisé en ce que le moule est chauffé, en particulier à une température entre 70°C et 90°C, au moins sur les faces en appui contre le côté visible de l'évier à encastrer, avant que le mélange coulant soit introduit dans le moule.
